# EUROPEAN PATENT APPLICATION

(11) **EP 3 208 175 A1**
(43) Date of publication of application: **23.08.2017**
(21) Application number: 16199075.9
(22) Date of filing: 16.11.2016
(51) Int. Cl.: B62B 3/06, B62B 3/00

(54) **PALLET TRUCK WITH RETRACTABLE SIDE-LOADING SYSTEM**

(30) Priority: 19.02.2016 ES 201630198 U
(71) Applicant: Amalimsa, S.L., 41500 Alcala de Guadaira (Sevilla) (ES)
(72) Inventor: González García, Inmaculada, 41500 Alcalá de Guadaira (Sevilla ) (ES)
(74) Representative: Bartrina Diaz, José María

(57) **Abstract**

Pallet truck with a retractable accessory that allows the pallet truck to silently side-load pallets when the retractable element is in a certain position (active). When said element is in the other position, the pallet truck functions as normal. Furthermore, should the retractable element be removed, the pallet truck will work in exactly the same way as with the element fitted. The invention make it possible to adapt a conventional pallet truck without modifying its most important parts, such as the diameter of the wheels on the tips of the forks, the height of the hydraulic pump and others; and makes it possible to undo the changes to the pallet truck and return it to a standard configuration by simply removing the elements of the mechanism of the invention with a simple and quick movement.

## Description

### OBJECT OF THE INVENTION

The invention in question is a pallet truck with a retractable accessory that allows the pallet truck to silently side-load pallets when the retractable element is in a certain position (active). When said element is in the other position, the pallet truck functions as normal. Furthermore, should the retractable element be removed, the pallet truck will work in exactly the same way as with the element fitted.

### BACKGROUND TO THE INVENTION

A pallet truck exists with a fixed wheel for side-loading pallets silently. However, this fixed system has a series of disadvantages, due both to the steering wheel being close to the fork support wheels, and the fact the pair of wheels are fixed. This arrangement makes driving the pallet truck more complicated and dangerous. Furthermore, installing the system involves heavily modifying the pallet truck. Changes include altering the diameters of the fork wheels and adjusting the height of the hydraulic pump in the steering wheel. As a result, during use, the pump rod must be fully retracted when the pallet truck is in position for side-loading; and therefore, to use the pallet truck normally, it needs to be raised slightly, which wastes time and can also physically exert the operator in the case of manual truck pallets.

With this invention it is not necessary to significantly modify a normal pallet truck. It is also possible to change the configuration of the pallet for side-loading by performing a simple action, which can be manual or electric.

This invention works with both manual and electric pallet trucks.

Currently the following devices also exist:
1.- ES 1 007 081 U. This is a roller that makes it possible to move a pallet or any other object. Since it runs along two tracks embedded in the supporting surface, it can adopt two positions, resting or working, according to which it varies its height, being able therefore to slide under the object being transported or lift it above the supporting surface for transport. This roller is designed for loading and unloading pallets in and out of vehicles, for which it has a series of evenly distanced guides along its length.
2.- ES-2431580_T3. Pallet loader and handler. The pallet loader and handler can be loaded with a pallet in the horizontal position to then reorient the pallet vertically for the purpose of loading the pallet and work element into a machine or tool.
3.- ES-2204246_A1. Pallet storage system. The system is used in parts warehouses with pallet racking, where there are shelves with platforms onto which pallets are loaded. The system works at a fixed height, but several can be stacked on the same platform. The system is based on the platform having a series of cars telescopically connected to each other and able to move independently and jointly along a set of rails on a frame on which the wheels of the first car slide. The wheels of the other cars slide on guides along the sides of the other cars, sliding along the back wheels of the last car on the upper flange of the frame profiles. The empty cars move to the front area of the frame and pile up to receive a first pallet deposited on the cart, and then move back in order that the pallets are loaded.
4.- ES-2204246_A1. Reinforcement for pallet rollers. This reinforcement has been especially designed for supporting rollers on pallets that create a convenient distance between the loading platform and the support plane, to make it possible to introduce the fork of a pallet truck or forklift. The invention is designed specifically for cardboard pallets, and its purpose is to make their rollers more rigid in order to increase their resistance to bending.
5.- WO 2008059078 A1. Side loader used to handle loads in, for example, warehouses. It is characterised by having: a) mast in a car with a means for linear horizontal movement; b) a head on said mast with a means for linear vertical movement; and c) and arm fitted with a claw or another mean for tying/holding on to the load, with said arm being mounted on the head and fitted with a means for lateral horizontal movement.
6.- ES201530677. Pallet truck especially built for side-loading. Pallet truck especially built for side-loading without tripping or impacts with the pallet support band, achieved by integrating wheels in an middle position of the forks and elevating the existing wheels at the front ends of the forks above ground level.

The proposed invention has the following advantages, and is therefore novel, compared to the current state of the art, in that there is no other device that has all of the characteristics of this one:
- This invention makes it possible to adapt a conventional pallet truck without modifying its most important parts, such as the diameter of the wheels on the tips of the forks, the height of the hydraulic pump and others.
- This invention makes it possible to undo the changes to the pallet truck and return it to a standard configuration by simply removing the elements of the mechanism of the invention with a simple and quick movement.

### EXPLANATION OF THE INVENTION

The invention comprises the following elements:
➢ Conventional pallet truck, which in turn comprises:
   a. Transporting forks.
   b. Set of wheels, one on each fork tip.
   c. Back wheel or wheels for support and steering.
   d. Fork lifting cylinder.
   e. Steering wheel, which includes the handle, lever, and elements that raise and lower the load by interacting with the lifting cylinder, as well as the turning points that make it possible to control the load during transportation.
➢ Middle wheels, mounted on a support that is screwed to the forks of the pallet truck in a fixed position.
➢ The transmission system comprises a group of sheathed steel cables, tension brackets for said cables that connect both fork wheels with the drive mechanism.
➢ Drive mechanism, which may be a linear actuator (pneumatic or electric) or a manual lever.

In addition, on the forks, at a distance from the tip of the fork equal to the width of a pallet, the invention has an assembly that contains the following:
➢ Middle wheels, that provide support when side-loading the pallet.
➢ Support for the wheel axis, also used to provide support for the dock and bracket. The hole mounts for the cable brackets and dock support can be found in the independent support.
➢ Mounting fork attached to the wheel axis, connected on one side to the dock, which is anchored to one end of the support, and on the other side to the cable that connects to the drive system, the bracket of which is also anchored to the other end of the support.
➢ Return spring: on the side farthest from the steering wheel there is an anchor for a return spring, which, when the drive system is not being actuated, causes the middle wheel to retract, leaving the pallet truck supported on the wheels on the tip of the forks.
➢ Anchor for cable brackets: on the side closest to the steering wheel there is an anchor for a bracket that allows for a sheathed steel cable to pass through, connected to the drive system. This set of cables and brackets make up the drive transmission system.

An alternative construction could comprise a set of cams that retract the middle wheels by pulling from one side (which can be achieved with a cable or lever) and a recovery system, which can be actuated equally by a spring, gas cylinder, or any other kind of spring.

The pallet truck also includes the drive system, which can be a lever with a mechanical retention system or an actuator (hydraulic, pneumatic or electric). Said drive system is connected to the drive transmission system such that it indirectly intervenes in the positioning of the middle wheels: pulling on the cable moves the wheel until it reaches its lowest level in the groove or cams.

Thus, to silently load the pallet along its longer side, where it generally has supports, the pallet truck causes a set of supports to protrude at a distance slightly wider than the width of the pallet, such that it goes below what used to be the supporting surface, elevating the tips of the forks. Said elevation of the tips of the forks is such that the pallet support is circumvented by the structure of the pallet and by the wheels on the tip of the fork, but it does not exceed the height that limits the support that closes the gap in the top of pallet on that side. This arrangement makes it possible for the fork to go in smoothly, and therefore silently.

Alternatively, a pallet truck could be designed and manufactured that comes with the described mechanisms. In this case, the device defined in the invention would not be an accessory but a part of the truck.

### DESCRIPTION OF THE DRAWINGS

In order to complement the current description and to facilitate a better understanding of the characteristics of the invention, as well as display the preferred embodiment of the invention, a set of figures is attached, which is an integral part of this description, for the purposes of illustration only, showing the following:

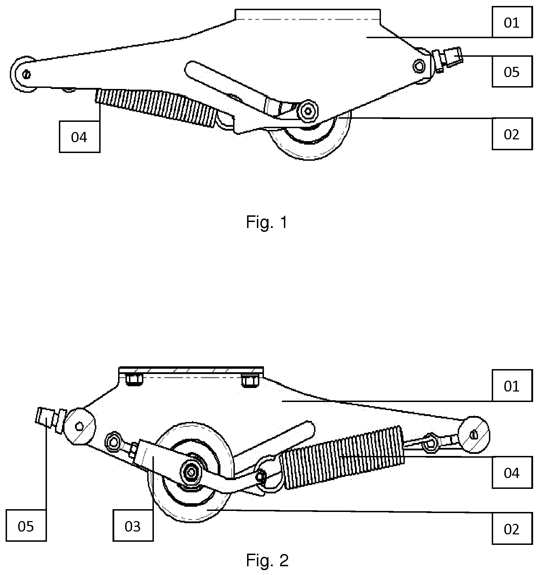

Figure 1: retractable middle wheel mechanism.
Figure 2: cross-section of retractable middle wheel mechanism.

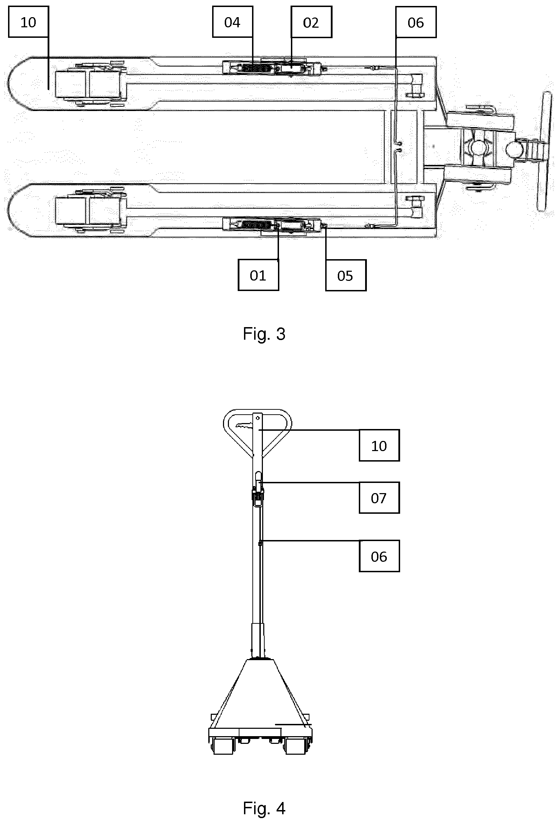

Figure 3: Underside view of the pallet truck with retractable system.
Figure 4: Front view of the pallet truck with retractable system, manual version.

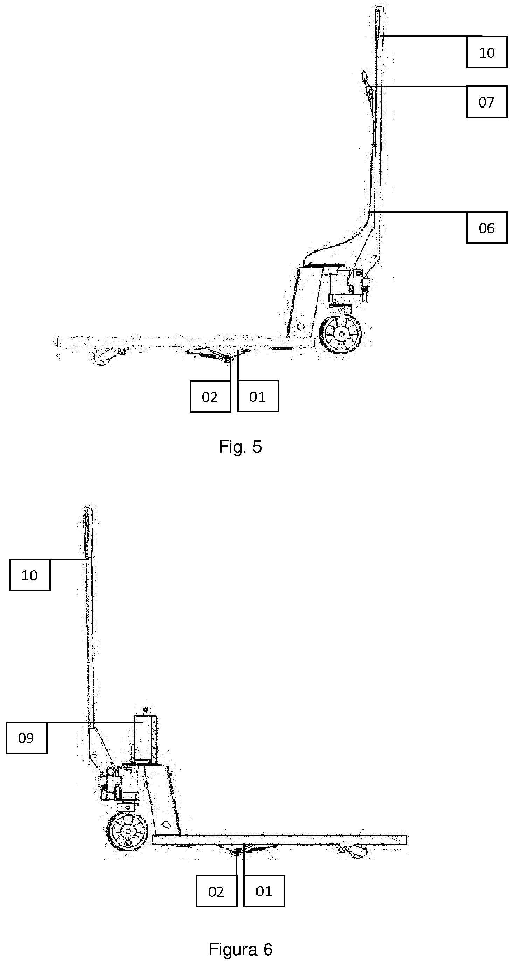

Figure 5: Side view of the pallet truck with retractable system, manual version.
Figure 6: Side view of the pallet truck with retractable system, linear actuator version.

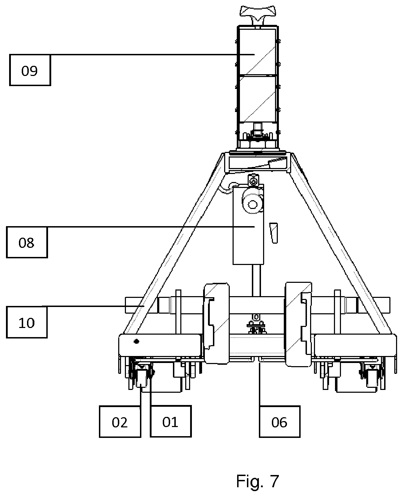

Figure 7: Cross-section of front view of the pallet truck with retractable system, linear actuator version.

The following constituent elements can be highlighted in the aforementioned figures:
01. Supporting mechanism for middle wheels.
02. Middle wheels.
03. Mounting fork.
04. Return spring.
05. Cable bracket.
06. Sheathed metal cable.
07. Manual actuator.
08. Linear actuator.
09. Battery box.
10. Conventional pallet truck.

### EXAMPLE OF PREFERRED EMBODIMENT

As an example of the preferred embodiment of this invention, "Pallet truck with retractable side-loading system adaptable for this configuration", an explanation of the different manufactured elements that the invention needs to work is provided below:
Support mechanism for the middle wheels (1) with a "U" section that contains the different working areas. Firstly, along the sides of this support mechanism for the middle wheels, there are a set of grooves, where one section is at an angle and the other is horizontal. The axis of the middle wheel (2) will slide along this groove. At one end, the wheels may be fixed at a lower position than the fork wheels, and at the other they will be embedded in the forks. This wheel is housed in loading forks (3), and both parts are contained within the middle wheel support mechanism (1). Secondly, the middle wheel support mechanism (1) also has a fixture for a return spring (4) that is connected to the mounting fork (3) on one side. On the other side, in the third area, there is a fixture for a sheathed metal cable (6) that comes from a cable bracket (15), which is also fixed to the middle wheel support mechanism (1) on the other side. This way, if there is no traction in the sheathed metal cable (6), the return spring (4) keeps the middle wheel in its highest position, and when the sheathed metal cable (6) pulls, the middle wheel (2) is moved along the groove of the middle wheel support mechanism, reaching the working height for side-loading.

Exerting traction on the sheathed metal cable (6) to take the middle wheel (2) to the lowest position can be achieved by exerting traction on the end opposite to the mounting fork (3) by connecting it directly to a lineal actuator (8) that could be electrical, hydraulic or pneumatic, or to a manual actuator (7). In the case of an electric linear actuator (8) in conventional pallet trucks (10), a batter box (9) should be installed in a place does not affect the position of the load nor how the equipment is used and handled, as well as a button that sends the positioning instructions.

This description is considered sufficient so that any expert in the matter might understand the scope of the invention and the advantages which could be derived from its use. The material, shape or dimensions of the invention may change as long as this does not affect the essence of the invention.

## Claims

1. Pallet truck with retractable side-loading system, characterised for comprising the following elements:
➢ Conventional pallet truck, which in turn comprises:
f. Transporting forks.
g. Set of wheels, one on each fork tip.
h. Back wheel or wheels for support and steering.
i. Fork lifting cylinder.
j. Steering wheel, which includes the handle, lever, and elements that raise and lower the load by interacting with the lifting cylinder, as well as the turning points that make it possible to control the load during transportation.
➢ Transmission system, comprising a group of sheathed steel cables and tension brackets for said cables that connect both fork wheels with the drive mechanism.
➢ Drive mechanism, which may be a linear actuator (pneumatic or electric) or a manual lever, which is connected to the transmission or drive system, acting indirectly in the positioning of the middle wheels.
➢ Assembly on the forks, at a distance from the tip of the fork equal to the width of a pallet, which contains the following:
- Middle wheels, that provide support when side-loading the pallet.
- Support for the wheel axis, also used to provide support for the dock and bracket. The hole mounts for the cable brackets and dock support can be found in the independent support.
- Mounting fork attached to the wheel axis, connected on one side to the dock, which is anchored to one end of the support, and on the other side to the cable that connects to the drive system, the bracket of which is also anchored to the other end of the support.
- Return spring: on the side farthest from the steering wheel there is an anchor for a return spring, which, when the drive system is not being actuated, causes the middle wheel to retract, leaving the pallet truck supported on the wheels on the tip of the forks.
- Anchor for cable brackets: there is an anchor for a bracket that allows for a sheathed steel cable to pass through, connected to the drive system. This set of cables and brackets make up the drive transmission system.

2. Pallet truck with retractable side-loading system according to claim 1, characterised for comprising a set of cams that retract the middle wheels by pulling from one side (which can be achieved with a cable or lever) and a recovery system, which can be actuated by a spring, gas cylinder, or any other kind of spring.

3. Pallet truck with retractable side-loading system according to claims 1 and 2, because the middle wheel support mechanism with "U" section contains different functional areas. Firstly, along the sides of this support mechanism for the middle wheels, there are a set of grooves, where one section is at an angle and the other is horizontal, along which the axis of the middle wheel can slide. This wheel is housed in loading forks, and both parts are contained within the middle wheel support mechanism. Secondly, the middle wheel support mechanism also has a fixture for a return spring that is connected to the mounting fork on one side. On the other side, in the third area, there is a fixture for a sheathed metal cable that comes from a cable bracket, which is also fixed to the middle wheel support mechanism on the other side.
